Europäisches Patentamt

European Patent Office

Office européen des brevets

(11) Publication number: 0 208 543
A2

## (12) EUROPEAN PATENT APPLICATION

(21) Application number: 86305282.5

(51) Int. Cl.⁴: B23B 31/04

(22) Date of filing: 09.07.86

(30) Priority: 10.07.85 AU 1400/85

(43) Date of publication of application:
14.01.87 Bulletin 87/03

(84) Designated Contracting States:
AT BE CH DE FR GB IT LI LU NL SE

(71) Applicant: Leadbeatter, Bruce Robert
59 Turton Street
Belmore New South Wales 2192(AU)

(72) Inventor: Leadbeatter, Bruce Robert
59 Turton Street
Belmore New South Wales 2192(AU)

(74) Representative: Enskat, Michael Antony Frank
et al
Saunders & Dolleymore 2 Norfolk Road
Rickmansworth Hertfordshire WD3 1JH(GB)

(54) A cup chuck.

(57) The present invention discloses a cup chuck in which a workpiece (4) is able to be removed and replaced "true" as many times as is necessary. The frusto-conical cavity (3) of a conventional cup chuck is replaced with a substantially cylindrical cavity - (13) having an internal thread (17) and a thread cutting arrangement (11,18,20) which is capable of cutting a mating external thread on a substantially cylindrical boss (16) on the workpiece (4). Thus the workpiece (4) is releasably threadably engaged with the cavity (13).

FIG.3

EP 0 208 543 A2

The present invention relates to cup chucks and, in particular, to a cup chuck which enables a workpiece to be removed from the chuck and replaced in a substantially identical position.

Conventional cup chucks have a frusto-conical cavity into which a workpiece turned to have a like frusto-conical projection is engaged by means of a frictional fit. This prior art suffers from two disadvantages in that the forces exerted by the cutting tool on the workpiece tend to loosen the workpiece in the chuck and, secondly, the workpiece cannot be easily and accurately removed and replaced in the chuck so as to be "true" (i.e. replaced in substantially the same position relative to the chuck axis). The latter problem is a severe one in school or college situations as it is often necessary that a lathe be used for a subsequent class and a particular student may not have finished his or her job at the end of the time allocated to the particular class.

Embodiments of the present invention will now be described with reference to the drawings in which:

Fig. 1 is a schematic side elevation and cross-section of the traditional prior art cup chuck,

Fig. 2 is a schematic perspective view of the cup chuck of a first embodiment of the present invention,

Fig. 3 is a view similar to Fig. 2 but of a cup chuck of a second embodiment,

Fig. 4 is a view similar to Figs. 2 and 3 but of a cup chuck of a third embodiment,

Fig. 5 is a view similar to Figs. 2 to 4 but of a cup chuck of a fourth embodiment,

Fig. 6 is a view similar to Figs. 2 to 5 but of a cup chuck of a fifth embodiment, and

Fig. 7 is a view similar to Fig. 1 but of a cup chuck of a further embodiment of the present invention.

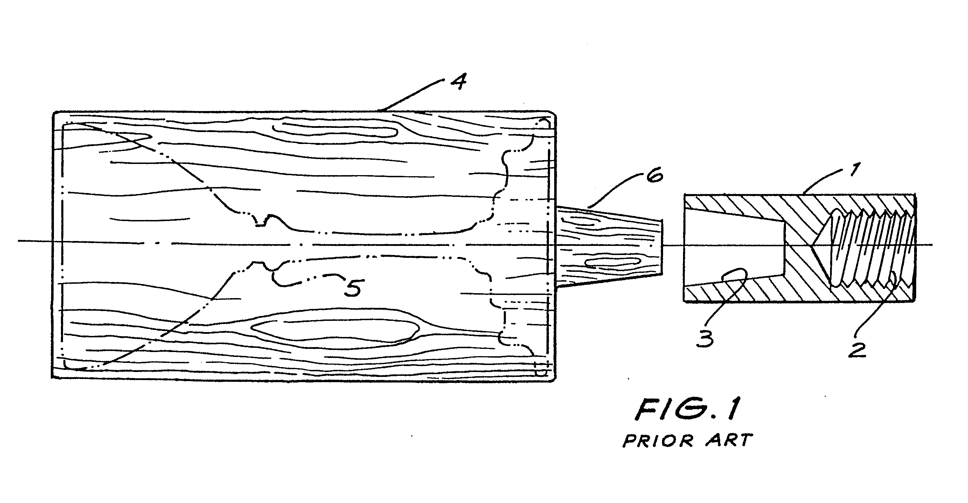

The prior art cup chuck is illustrated in Fig. 1 and comprises a normally cylindrical body 1 having a threaded aperture 2 at one end by which means the cup chuck can be secured to, and rotated by, a woodturning lathe (not illustrated). At the other end of the body 1 is a frusto-conical opening 3.

Also illustrated in Fig. 1 is a blank 4 from which a workpiece is to be turned. A typical workpiece used in relation to cup chucks is indicated by dotted lines Fig. 1 and comprises a goblet 5. Other articles such as the goblet 5 which can be turned by cup chucks include salt and pepper shakers and other such articles which are essentially turned whilst being held only at one end.

In order to use the prior art cup chuck illustrated in Fig. 1, it is necessary that the blank 4 first be turned in a conventional lathe so as to produce a frusto-conical boss 6 which mates which the opening 3. Clearly, this is a turning activity which requires some skill and time in its own right. Furthermore, a number of different cup chucks having different sized frusto-conical openings are required in order to cater for different size goblets, for example.

Since the engagement between the cup chuck and the blank 4 is based upon the frictional fit between the boss 6 and opening 3, if the boss 6 is turned too small initially, either the entire blank 4 must be discarded, or another cup chuck, having a smaller opening 3 must be used and the boss 6 turned down to a smaller size to suit.

Furthermore, it is only the frictional fit between the boss 6 and opening 3 which permits the blank 4 to be turned as the cup chuck is turned by the lathe. Thus the action of the cutting tool (not illustrated) on the blank 4 tends to loosen the engagement between the blank 4 and the cup chuck. As a consequence, the blank 4 or goblet 5 can fall out of the cup chuck before it has finished being turned possibly bruising or damaging the workpiece and/or boss 6.

Because of the above described structure, it is difficult to remove and replace the blank 4 from the cup chuck once turning has commenced. In - schools or colleges, this is a particularly important consideration since at the end of one lesson, a particular student in one class may not have finished the turning required, but must remove his workpiece from the chuck in order to permit students from a second class to use the equipment in the next teaching period. It is then difficult for the first student to replace his work with precision at his next class.

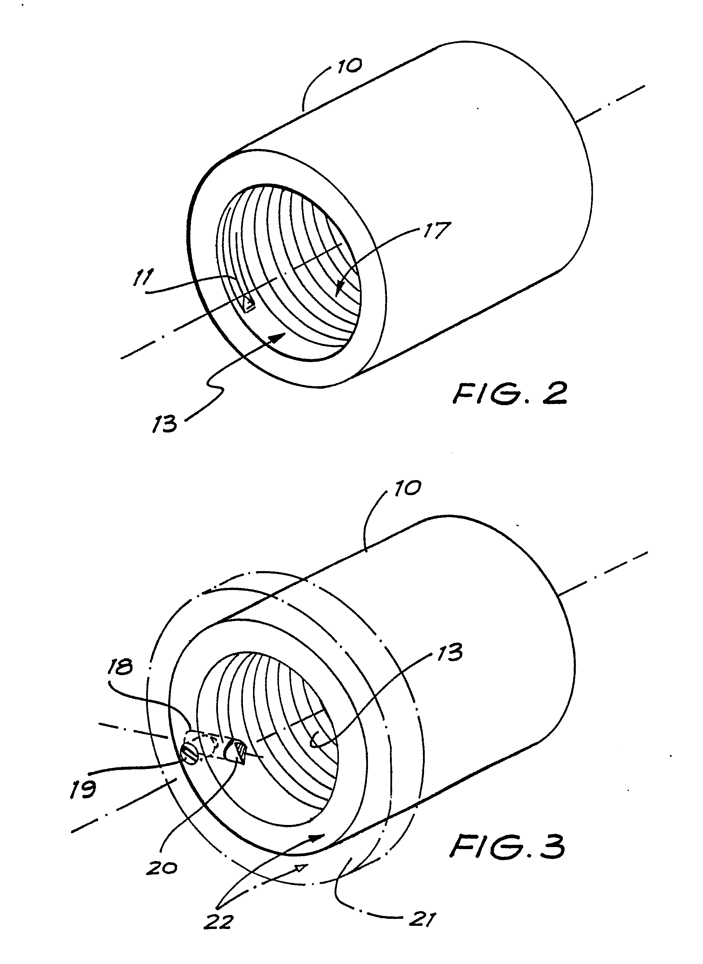

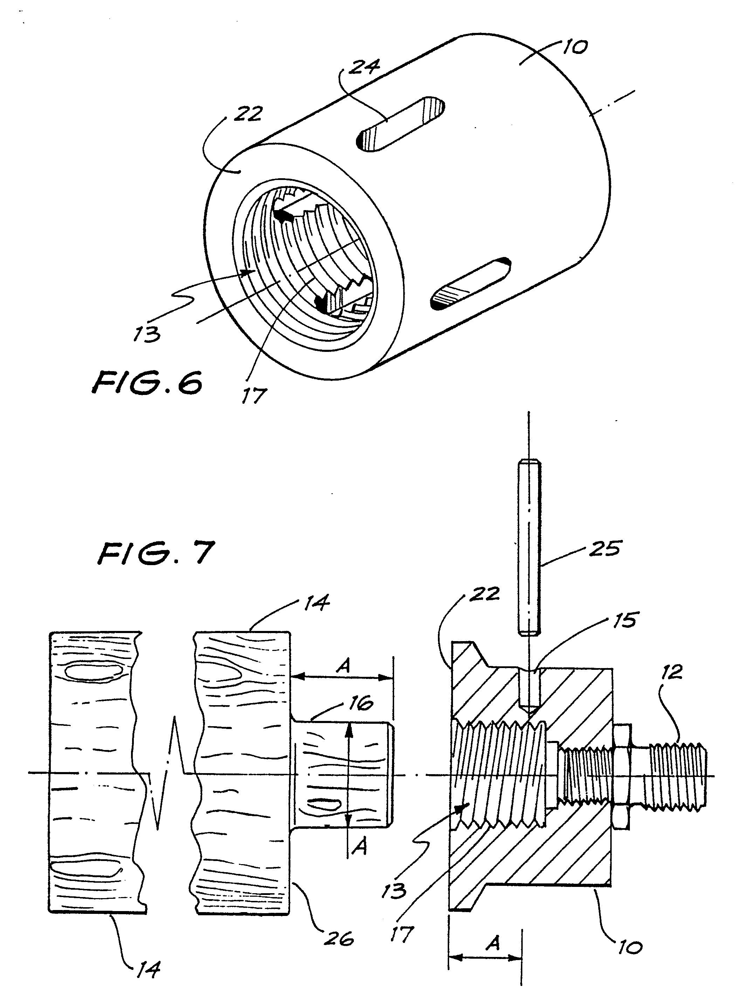

Fig. 2 illustrates the cup chuck of a first embodiment which is provided with a substantially conventional cylindrical body 10 having means (not illustrated) to connect the body 10 to the lathe in conventional fashion. The body 10 is provided with a substantially cylindrical opening 13 having an internal thread 17. The cup chucks of the embodiments of the present invention illustrated in Figs. 2 to 7 inclusive are intended for use with a blank 14 as illustrated in Fig. 7 having a substantially cylindrical boss 16. The boss 16 and opening 13 are arranged so that the boss 16 can be screwed into the opening 13 to securely position the workpiece 14 in the cup chuck.

In the arrangement of Fig. 2, the leading turn 11 of the internal thread 17 cuts a mating, external thread in the exterior surface of the boss 16. In this way, the blank 14 and the cup chuck can be releasably threadably engaged.

Turning now to the embodiment illustrated in Fig. 3, the cup chuck is substantially as described above in relation to Fig. 2, save that a rod 18 is releasably retained in the side wall of the body 10 by a grub screw 19. The interior end of the rod 18 is shaped to provide a cutting edge 20 which is arranged to cut the exterior thread on the boss 16 to mate with the internal thread 17 within the cylindrical opening 13.

As indicated by broken lines in Fig. 3, the cup chuck of the embodiment of Fig. 3 is preferably provided with an annular collar 21 which extends the area of the front face 22 of the chuck which is substantially perpendicular to the longitudinal axis of the cylindrical opening 13.

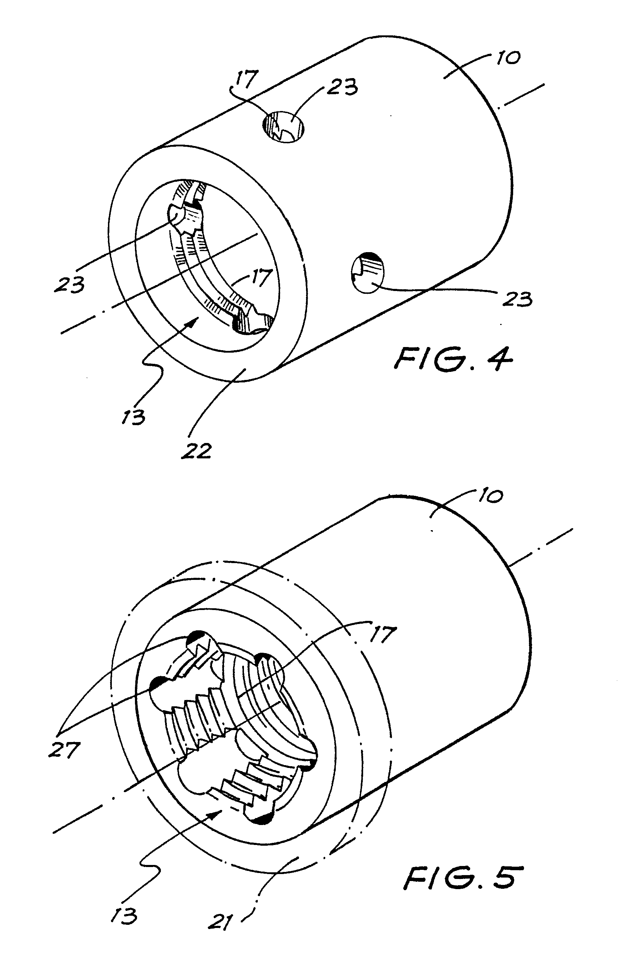

In Fig. 4, a substantially similar cup chuck is illustrated, the internal thread 17 not being illustrated throughout the entire depth of the opening 13. In this embodiment a plurality of holes 23 are formed in the body 10 so as to intersect the internal thread 17 and thereby truncate some of the threads 17. It will be apparent to those skilled in the art that the truncated ends of the threads 17 formed by the holes 23, constitute cutting edges which cut an exterior thread in the boss 16 so that it mates with the thread 16 in the cavity 13.

Fig. 5 illustrates a further variation in that a series of radially spaced grooves 27 are formed in the side wall of the opening 13 to again truncate selected ones of the threads 17. Again, the truncated threads constitute cutting edges for the boss 16.

Fig. 6 illustrates a still further embodiment similar to that of Fig. 4 in which elongate slots 24 are formed in the body 10. One advantage of the arrangement of Figs. 4 and 6 is that any swarf cut from the cylindrical boss 16 is thrown from the chuck when it is rotated.

It will be apparent to those skilled in the art that the chucks of Figs. 2 to 6 inclusive can be provided with the threaded aperture 2 of the chuck of Fig. 1, if desired. Alternatively, the chucks of Figs. 2 to 6 can be secured to the lathe by means of an externally threaded male part having a configuration generally similar to that of the chuck illustrated in Fig. 7. Turning now to Fig. 7 in detail, a chuck of a general type illustrated in Figs. 2 to 6 is illustrated in cross-section. An externally threaded member 12 is threadably engaged with the chuck and provides a means of securing the chuck to the lathe.

The chuck of Fig. 7 is provided with an internally threaded opening 13 as before and a thread cutting arrangement of any one of the types illustrated in Figs. 2 to 6 inclusive. However, in addition, the chuck of Fig. 7 is provided with a blind hole 15 which is able to receive a wrench pin 25 to enable the body to be turned in either direction relative to both the lathe (so as to either tighten or loosen the chuck in the lathe) and also the blank 14.

Preferably, the chuck of Fig. 7 is dimensioned as illustrated in that figure so that the distance between the front face 22 and the blind hole 15 is A. A woodturner with a pair of dividers is easily able to set the dividers to this distance A. The woodturner is then able to use this distance to form both the depth and diameter of the cylindrical boss 16 to this distance. As a consequence, when the boss 16 is threadably engaged with the opening 13, the flat surface 26 of the blank 14 comes into engagement with the front face 22, before the boss 16 fully reaches into the interior of the opening 13.

The result is, therefore, that the blank 14 is securely held against the front face 22 which is perpendicular to the longitudinal axis of both the opening 13 and the body 10. As a consequence, the blank 14 is held "true". In addition, the blank 14 can be unscrewed from the opening 13 and replaced "true" as many times as is necessary. This represents a substantial advantage for educational institutions and in all turning and/or finishing operations generally.

The foregoing describes only some embodiments of the present invention and modifications, obvious to those skilled in the art, can be made thereto without departing from the scope of the present invention. For example, the threaded member 12 can take the form of a bolt, the head of which is retained at the base of the opening 13 and the threaded shank of which protrudes through the body 10 to extend therefrom in the manner of the threaded member 12 as illustrated in Fig. 7.

## Claims

1. A cup chuck for woodturning lathes, said chuck comprising an elongate body having at one of its opposite ends means to secure said chuck to said lathe for rotation thereby, and having at the other end a substantially cylindrical opening having an internal thread wherein thread cutting means are associated with said opening to cut an exterior thread in a substantially cylindrical portion of a workpiece to be mounted in said chuck, said cut exterior thread releasably engaging with said internal thread of said opening.

2. A cup chuck as claimed in claim 1 wherein said thread cutting means comprises the leading turn of the internal thread of said cylindrical opening.

3. A cup chuck as claimed in claim 1 wherein said thread cutting means comprises a single thread cutting projection extending into the interior of said cylindrical opening.

4. A cup chuck as claimed in claim 1 wherein said thread cutting means comprises the leading face of a plurality adjacent truncated threads of said internal thread.

5. A cup chuck as claimed in claim 4 wherein said truncated threads are formed by an orifice cut in the interior of said cylindrical opening.

6. A cup chuck as claimed in claim 5 wherein said orifice extends to the exterior surface of said body.

7. A cup chuck as claimed in claims 5 or 6 and having a plurality of said orifices each radially spaced around said cylindrical opening.

8. A cup chuck as claimed in any one of claims 1 to 7 wherein a flat face is provided at said other end, the surface of said flat face being substantially perpendicular to the longitudinal axis of said cylindrical opening.

9. A cup chuck as claimed in claim 8 wherein a blind hole is provided in the exterior of said body to releasably receive a wrench pin wherein the distance between said front face and said blind hole corresponds to the diameter and longitudinal extent of said cylindrical workpiece portion to be mounted in said chuck by releasable threaded engagement with said cylindrical openings.

10. A cup chuck substantially as described with reference to any one of Figs. 2 to 7 of the drawings.

**FIG.1**
PRIOR ART

0 208 543

FIG. 2

FIG. 3

0 208 543

FIG. 4

FIG. 5

FIG.6

FIG. 7